# EUROPEAN PATENT APPLICATION

(11) **EP 4 421 192 A1**
(43) Date of publication of application: **28.08.2024**
(21) Application number: 23164160.6
(22) Date of filing: 24.03.2023
(51) Int. Cl.: C22B 3/06, H01M 10/54

(54) **MICROSTRUCTURE TUNING OF CATHODE MATERIAL**

(30) Priority: 23.02.2023 US 202318113312
(71) Applicant: Ascend Elements, Inc., Westborough, MA 01581 (US)
(72) Inventor: LIU, Yadong, Westborough, MA 01581 (US); DENG, Haixia, Westborough, MA 01581 (US); GRATZ, Eric, Westborough, MA 01581 (US); MISTRY, Dhiren, Westborough, MA 01581 (US); PARMA, Anil, Westborough, MA 01581 (US)
(74) Representative: Greaves Brewster LLP

(57) **Abstract**

A recycling process for Lithium-ion (Li-ion) batteries includes a selective leach of charge material metals followed by impurity control for effecting microstructures such as a pore volume and surface area for optimal structures and charge performance. Particle characteristics having a favorable effect on performance correlate with soluble impurities in a recycling leach solution formed from spent charge material in a battery recycling stream. Spent batteries yield a black mass of agitated, comingled cathode material, anode material and current collectors. Leaching of the black mass yields a recycling solution of charge material metals and impurities. Selective adjustment of these impurities through adding and/or separating soluble ions in the solution drives formation of internal voids, surface area and pore volume in the resulting cathode material.

## Description

### BACKGROUND

Lithium-ion (Li-ion) batteries are a preferred chemistry for secondary (rechargeable) batteries in high discharge applications such as electrical vehicles (EVs) and power tools where electric motors are called upon for rapid acceleration. Li-ion batteries include a charge material, conductive powder and binder applied to or deposited on a current collector, typically a planar sheet of copper or aluminum. The charge material includes anode material, typically graphite or carbon, and cathode material, which includes a predetermined ratio of metals such as lithium, nickel, manganese, cobalt, aluminum, iron and phosphorous, defining a so-called "battery chemistry" of the Li-ion cells. The preferred battery chemistry varies between vendors and applications, and recycling efforts of Li-ion batteries typically adhere to a prescribed molar ratio of the battery chemistry in recycled charge material products. Qualitative differences in particles of the charge material, including microstructures within and on the surface of the charge material particles, affect performance of the recycled battery cells based on the recycled charge material.

### SUMMARY

A recycling process for Lithium-ion (Li-ion) batteries includes a selective leach of charge material metals followed by impurity control for effecting microstructures such as a pore volume and surface area for optimal structures and charge performance. Particle characteristics having a favorable effect on performance correlate with soluble ion impurities in a recycling leach solution formed from spent charge material in a battery recycling stream. Spent batteries yield a black mass of agitated, comingled cathode material, anode material and current collectors. Leaching of the black mass yields a recycling solution of charge material metals and impurities. Some of these impurities are soluble and would not be precipitated during the co-precipitation reaction, but they would affect the co-precipitation process and the microstructure of precursor, and consequently the microstructure of cathode material. Selective adjustment of these impurities through adding, diluting and/or separating soluble ions in the solution drives formation of internal voids, surface area and pore volume in the resulting cathode material.

Configurations herein are based, in part, on the observation that the increase in popularity of electric and hybrid vehicles (EV/HV) generates a large volume of spent li-ion batteries including charge material such as NMC (Ni, Mn, Co) cathode material. Recycling processes for NMC charge material performs leaching of the spent NMC charge material, often with augmentation using control (virgin) stock of the Ni, Mn, Co salts to achieve a predetermined ratio of the charge material metals according to technical or customer specifications. Unfortunately, conventional approaches to NMC recycling suffer from the shortcoming that particles of recycled NMC charge materials may have undetermined and/or unfavorable microstructures such as internal voids, pore volume and porosity. It can be problematic to satisfy customer specifications for performance and physical cathode material characteristics when substantial quantities of recycled cathode materials are incorporated into the recycled product.

Accordingly, configurations herein substantially overcome the shortcomings of conventional cathode material recycling by controlling impurities in the recycling leach solution for forming desired or intended microfeatures or microstructures in the recycled cathode material. During recycling, small amounts of impurities remain in the leach solution even after filtration and precipitation methods for removal. The impurities are in the form of soluble ions in the leach solution, and configurations herein demonstrate beneficial performance effects resulting from controlled concentrations of impurities, such as sodium and lithium, in addition to the metal salts (e.g. Ni, Mn, Co) of the recycled cathode material.

In further detail, in a battery recycling environment for producing recycled charge material by adjusting a ratio of charge material metals from a black mass of exhausted batteries, a method for forming microstructures in a cathode material precursor includes adjusting a concentration of soluble ions in a leach solution based on an intended or targeted microstructure formed in co-precipitated particles from the leach solution. Subsequent precipitation of charge material precursor results in particles having the formed microstructure from the leach solution.

The method of producing a cathode material precursor from a recycled battery involves leaching a black mass from spent lithium-ion batteries to obtain a leach solution including a ratio of dissolved charge material metals and a concentration of soluble ion impurities. Recycling includes adjusting the ratio of the charge material metals to a selected ratio with additional charge material metal salts. A further adjustment of the concentration of soluble ion impurities is performed. After adjustment of the ratio and the concentration, co-precipitation of the charge material metal salts forms the cathode material precursor having the selected ratio and exhibiting the targeted, intended microstructures in the charge material particles.

### BRIEF DESCRIPTION OF THE DRAWINGS

The foregoing and other features will be apparent from the following description of particular embodiments disclosed herein, as illustrated in the accompanying drawings in which like reference characters refer to the same parts throughout the different views. The drawings are not necessarily to scale, emphasis instead being placed upon illustrating the principles of the invention.
Fig. 1 is a context diagram of a recycling environment suitable for use with configurations herein;
Fig. 2 is a flowchart of a recycling process as disclosed herein with impurity control in the cathode material leach;
Figs. 3A-3C are an example of microstructures including interior voids in the charge material particles; and
Fig. 4 shows cycling performance results from soluble ion impurities resulting from the process of Fig 2.

### DETAILED DESCRIPTION

Depicted below is an example method and approach for recycling batteries such as NMC batteries. Configurations herein employ NMC battery chemistry as an example, however the disclosed soluble ion approach may be practiced with any suitable battery chemistry. Li-ion batteries employ a so-called battery chemistry, which defines the types and ratios of metal ions used to form the cathode material; anode material is almost always carbon or graphite formulations. The particular ratio is set by the manufacturer and is often accompanied by a specification of internal voids, porosity, and other physical features. Vendors of charge material and charge material precursor generate charge material products meeting the manufacturer prescribed specifications. Soluble ions meeting a predetermined concentration in the leach solution are employed to cause these physical features to take the desired form on the charge material particles.

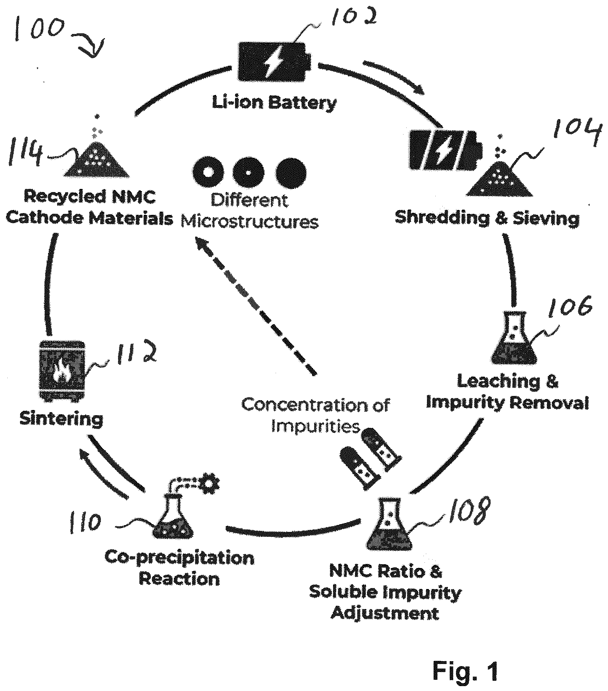

Fig. 1 is a context diagram of a recycling environment suitable for use with configurations herein. Referring to Fig. 1, a recycling scenario 100 begins with a deployed Li-ion battery 102, typically from an EV. Li-ion batteries 102 have a finite number of charge cycles before the ability of the charge material to accept sufficient charge degrades substantially. Add to this the batteries from premature end-of-life due to vehicle failure, collision damage, etc. The collective end-of-life recycling stream contributes to an abundant supply of spent cells and charge material 104, which are discharged and agitated into a granular mass through physical grinding, shredding and pulverizing. A leach process receives a black mass including the charge material and any incidental casing and current collectors of copper and aluminum. The black mass, including both cathode material of cathode material metal salts and anode materials of carbon and graphite, is used to form a leach solution 106 of dissolved charge material metals.

In an example configuration, the leach solution includes Ni, Mn and Co in a sulfate solution from sulfuric acid leaching, however other charge material metals and/or leach acid may be employed. The leach solution 106 has a molar ratio of Ni, Mn and Co based on the constituent composition of the incoming recycling stream. The molar ratio is adjusted with additional Ni, Mn and Co sulfate (typically a virgin or control form of fresh materials) to yield a target ratio-adjusted solution 108.

A coprecipitation reaction in one or more vessels 110 adjusts the pH of the leach solution for precipitating the charge material metals (charge materials) in the desired ratio resulting from the adjustment. Sodium hydroxide or other strong base causes the NMC to fall out of solution in a granular form, separable by filtration, typically as hydroxides. This granular form precipitated from the pH adjustment of the leach solution is a cathode material precursor, having the desired molar ratio for a target battery chemistry for the new, recycled batteries. Sintering in a furnace 112 with lithium carbonate or other lithium salts forms the active cathode material 114 for the recycled Li-ion battery. In an example configuration, active cathode material LiNiₓMn_{y}Co_{z}O₂ is synthesized by sintering NiₓMn_{y}Co_{z}(OH)₂ and Li₂CO₃, where x, y and z represent the respective molar ratios of Ni, Mn and Co. In the example shown, the resulting recycled cathode material is NMC 111, representing equal molar components of Ni, Mn and Co. Other common chemistries include NMC 811, NMC 622 and NMC 532, however any suitable molar ratio may be achieved by the ratio adjustment in the leach solution 106-108 and sintering. The recycled cathode material performs equal to or better than control materials when generated with soluble ions as described further below.

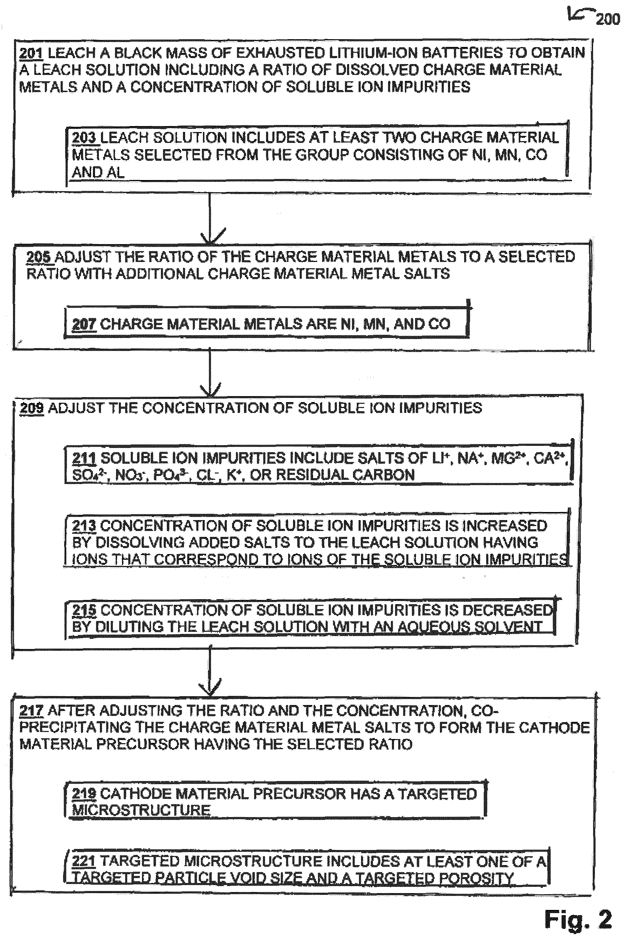

Fig. 2 is a flowchart 200 of a recycling process as disclosed herein with impurity control in the formation of the cathode material precursor. Referring to Figs. 1 and 2, the method of producing a cathode material precursor from a recycled battery stream based on soluble impurities includes, at step 201 leaching a black mass of exhausted lithium-ion batteries to obtain a leach solution including a ratio of dissolved charge material metals and a concentration of soluble ion impurities. The black mass generally includes comingled cathode and anode material, as well as copper, iron and aluminum resulting from physical casing and current conductors of the recycled battery. The leach solution 106 includes at least two charge material metals selected from the group consisting of Ni, Mn, Co and Al, as depicted at step 203. In the example herein, a ratio of Ni, Mn and Co will be ascertained by testing. Most impurities are removed by filtration, while the metal salts of Ni, Mn and Co remained dissolved in the leach solution. In a specific example configuration, sulfuric acid is employed as a leach agent and forms sulfates of the charge material metals comingled in solution.

Based on the results of the tested ratio, the ratio of the charge material metals is adjusted to a selected ratio with additional charge material metal salts, as depicted at step 205. In the particular example shown, the charge material metals are Ni, Mn, and Co, as shown at step 207. Small amounts or impurities also remain in the adjusted leach solution. Microfeatures in the resulting precipitated charge material particles, such as interior voids, porosity and pore volume, have been surprisingly found to be affected and can be modified, formed or changed by the amounts of soluble ions of these impurities.

Accordingly, the level of soluble ion impurities is tested and the concentration of the soluble ion impurities adjusted, as depicted at step 209. The soluble ion impurities include salts of Li⁺, Na⁺, Mg²⁺, Ca²⁺, SO₄²⁻, NO₃⁻, PO₄³⁻, Cl⁻, K⁺, or residual carbon, or other beneficial impurities that may be added or emerge from the source recycling stream. Different soluble ion impurities may have varying effects; salts most likely to have beneficial performance effects include Li⁺, Na⁺, Mg²⁺, Ca²⁺, SO₄²⁻, or NO₃⁻, and in particular Li⁺ or Na⁺ salts are likely to effect internal voids and pore volume. It may be noted that the precursor charge material particles have not yet been sintered and combined with substantial quantities of Li, hence the Li in the precursor is deemed a trace impurity.

The concentration of impurities for achieving beneficial results varies based on the source recycling material and the impurities added; in general, a substantial impurity concentration would be on the order of 1-1000 ppm; beneficial effects may occur with a narrower range, such as 10-500 ppm or even as focused as 15-350 ppm. Sodium and sulfur may also define separate ranges.

The concentration of soluble ion impurities may be increased by dissolving added salts to the leach solution having ions that correspond to ions of the soluble ion impurities, as depicted at step 213. The beneficial effects of the soluble ions can be realized either from residual salts from the recycling stream, and/or salts added to the leach solution. Depending on the configuration, the soluble ions adjustment may precede or follow the charge material ratio adjustment. Conversely, the concentration of soluble ion impurities may be decreased by diluting the leach solution with an aqueous solvent, i.e. water, as depicted at step 215. Alternatively, or in addition, the concentration of soluble ion impurities may be decreased by adding charge material metal salts having charge material metals that correspond to the charge material metals of the leach solution while maintaining the ratio of charge material metals. In this way, the amount of soluble ions relative to the charge material metals is reduced.

After adjusting the ratio (charge material metals) and the concentration (soluble ions), the vessel 110 is used for co-precipitating the charge material metal salts to form the cathode material precursor having the selected ratio, benefitting from the enhancements of the soluble ions, as disclosed at step 217. In the example arrangement, this takes the form of charge material hydroxides precipitated from the leach solution and exhibiting the soluble ion impurities during coprecipitation from the vessel 110. Depending on the soluble ion concentration existing or established (from addition/dilution), the cathode material precursor may have a targeted microstructure, as depicted at step 219, meaning particular microstructure features driven by the soluble ion type and concentration. In the example shown, the targeted microstructure includes at least one of a targeted particle void size and a targeted porosity, as shown at step 221, and can be particularly affected by increased concentration of Li and/or Na for increasing void size and porosity, or reducing Li and/or Na for decreasing void size or porosity.

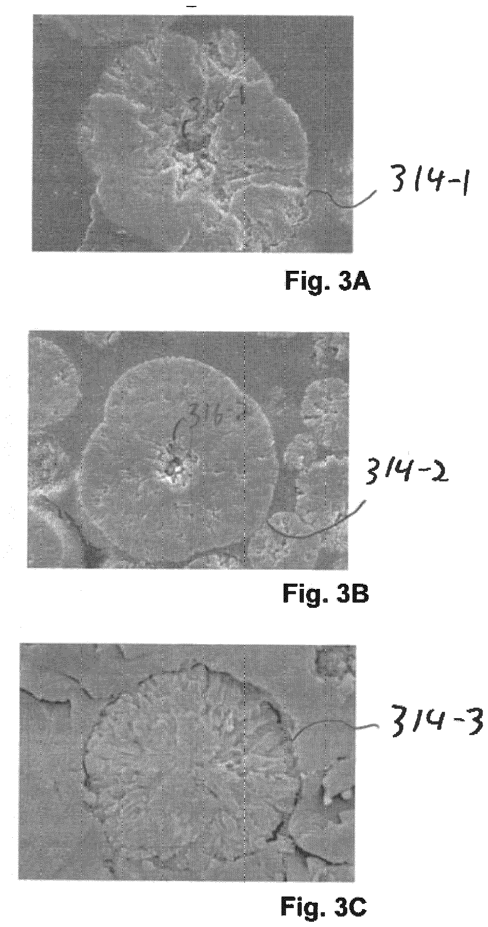

Figs. 3A-3C are an example of microstructures including interior voids in the charge material particles. The charge material precursor formed in the vessel 110 of Fig. 1 is generally in a particulate form, used to form active charge material particles 114 after sintering with Li in the furnace 112. Referring to Figs 1-3C, Figs. 3A-3C depict differences in internal voids 316-1, 316-2, and 316-3 (316 generally) in the charge material precursor particles 314-1, 314-2, and 314-3 (314 generally) resulting from directing the soluble ion impurities to higher or lower concentrations in the leach solution 106. Fig. 3A shows a particle 314-1 formed when the concentration of soluble ion impurities is increased to form a cathode material precursor having a void 316-1 with a size and/or porosity that is higher than a cathode material precursor formed without increasing the soluble ion impurities. Conversely, Fig. 3B shows a particle 314-2 formed when the concentration of soluble impurities is decreased to form a cathode material precursor having a void 316-2 having a size and/or porosity that is lower than a cathode material precursor formed without decreasing the soluble ion impurities. The concentration of soluble ions, in particular Li and Na, can be decreased by addition of water, or increased by addition of control Li or Na (or other soluble ion impurities that differ from the charge material metal ions such as Ni, Mn and Co). Fig. 3C shows a particle 314-C without a discernable void, which also results from controlling the soluble ion concentration towards a targeted microstructure.

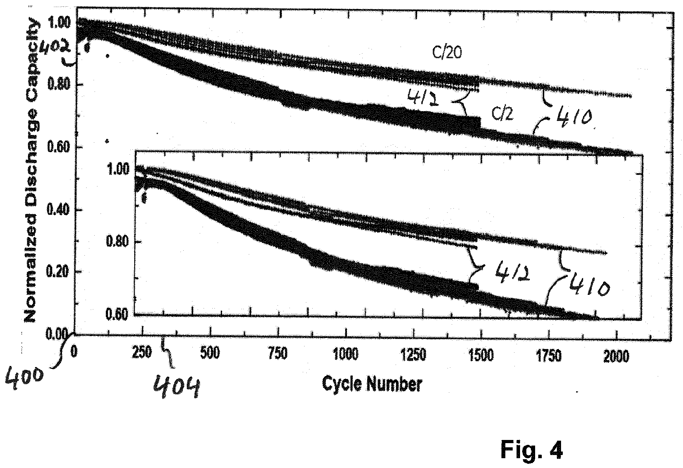

In general, it had been determined that the targeted void size or targeted porosity is higher when the concentration of the soluble impurities is increased, and the targeted void size or targeted porosity is lower when the concentration of the soluble impurities is decreased. Void size, along with porosity, is a characteristic that may be called for by customer specifications for charge material precursor. As demonstrated in Figs. 4 and 5 below, larger pore/void sizes, or in general adjusting or "steering" the collective pore/void size of a batch of charge material precursor particles can have a beneficial performance effect.

Fig. 4 shows cycling performance results from soluble ion impurities resulting from the process of Fig 2. Referring to Figs. 1 and 4, a graph 400 of capacity retention 402 over a number of charge cycles 404 is shown. The recycled material 410 exhibits performance equal to or better than control 412 or virgin (newly refined/purified) charge material.

The graph of Fig. 4 demonstrates the performance improvement from adjusting the concentration of dissolved soluble ion impurities. After adjusting the soluble ion concentration, most notably Li and Na, co-precipitation of charge material metals in the leach solution at 108 form the cathode material precursor from the leach solution exhibiting the intended microstructures of void size and porosity.

While the present disclosure provides example methods and approaches for recycling batteries such as exhausted NMC batteries, these methods would also be expected to be applicable to the purification of ores containing Ni and Co. For example, there are various intermediate ore products known in the art, including mixed sulphide precipitate (MSP), basic nickel carbonate (BCP), and mixed hydroxide product (MHP). Each contain Ni and Co but are not fully refined into battery grade nickel sulfate and cobalt sulfate due to the high cost and difficulty of separating the cobalt and nickel. However, using the method disclosed herein, battery grade cathode materials could be prepared from these ore materials at a significantly reduced cost. When the energy and process steps to separate the cobalt and nickel are not required, efficiency is improved for recycling steps similar to Fig. 1.

In particular, MSP, BCP, and MHP generally contain Mg and Ca as primary impurities, and these impurities are also found in the black mass of recycled NMC batteries. Impurity levels, such as in MHP, are only slightly higher than those of a typical black mass. Furthermore, MHP has a nickel concentration of from 30-40% while black mass from shredded NMC battery materials can also reach a nickel concentration in this range (greater than 30%). Handling characteristics of these ores would also be similar to those of a black mass. As such, it would be expected that these ore materials could be used in place of the black mass of the recycled battery material to produce battery grade cathode materials.

Therefore, the present disclosure further relates to a method of producing a cathode material precursor from an ore material such as MSP, BCP, or MHP having one or more charge materials. The process comprises leaching the ore material to obtain a leach solution including a ratio of dissolved charge material metal salts and a concentration of soluble ion impurities. The method further comprises adjusting the ratio of the charge material metal salts to a selected ratio with additional charge material metal salts and also adjusting the concentration of soluble ion impurities. After adjusting the ratio and concentration, the charge material metal salts are co-precipitated to form the cathode material precursor. The cathode material precursor preferably has a targeted microstructure that includes at least one of a targeted particle void size and a targeted porosity.

While the system and methods defined herein have been particularly shown and described with references to embodiments thereof, it will be understood by those skilled in the art that various changes in form and details may be made therein without departing from the scope of the invention encompassed by the appended claims.

## Claims

1. A method of producing a cathode material precursor from a recycled battery stream comprising:
leaching a black mass of exhausted lithium-ion batteries to obtain a leach solution including a ratio of dissolved charge material metals and a concentration of soluble ion impurities;
adjusting the ratio of the charge material metals to a selected ratio with additional charge material metal salts;
adjusting the concentration of soluble ion impurities; and
after adjusting the ratio and the concentration, co-precipitating the charge material metal salts to form the cathode material precursor having the selected ratio.

2. The method of claim 1, wherein the leach solution includes at least two charge material metals selected from the group consisting of Ni, Mn, Co and Al.

3. The method of claim 1, wherein the charge material metals are Ni, Mn, and Co.

4. The method of any preceding claim, wherein the soluble ion impurities include salts of Li⁺, Na⁺, Mg²⁺, Ca²⁺, SO₄²⁻, NO₃⁻, PO₄³⁻, Cl⁻, K⁺, or residual carbon, preferably wherein the soluble ion impurities include salts of Li⁺, Na⁺, Mg²⁺, Ca²⁺, SO₄²⁻, or NO₃⁻, more preferably wherein the soluble ion impurities are Li⁺ or Na⁺ salts.

5. The method of any preceding claim, wherein the concentration of soluble ion impurities is increased by dissolving added salts to the leach solution having ions that correspond to ions of the soluble ion impurities.

6. The method of any preceding claim, wherein the concentration of soluble ion impurities is decreased by diluting the leach solution with an aqueous solvent preferably wherein the aqueous solvent is water.

7. The method of any preceding claim, wherein the concentration of soluble ion impurities is decreased by adding charge material metal salts having charge material metals that correspond to the charge material metals of the leach solution while maintaining the ratio of charge material metals.

8. The method of any preceding claim, wherein the cathode material precursor has a targeted microstructure, preferably wherein the targeted microstructure includes at least one of a targeted particle void size and a targeted porosity.

9. The method of claim 8, wherein the targeted void size or targeted porosity is higher when the concentration of the soluble impurities is increased.

10. The method of claim 8, wherein the targeted void size or targeted porosity is lower when the concentration of the soluble impurities is decreased.

11. A method for forming microstructures in a cathode material precursor from a recycled battery stream, comprising:
measuring a concentration of dissolved soluble ion impurities in a leach solution from leaching a black mass of exhausted lithium-ion batteries;
adjusting the concentration of dissolved soluble ion impurities
after adjusting, co-precipitating charge material metals in the leach solution to form the cathode material precursor from the leach solution exhibiting the intended microstructures.

12. The method of claim 8 or claim 11, wherein the concentration of soluble ion impurities is increased to form a cathode material precursor having a void size or porosity that is higher than a cathode material precursor formed without increasing the soluble ion impurities.

13. The method of claim 8 or claim 11, wherein the concentration of soluble impurities is decreased to form a cathode material precursor having a void size or porosity that is lower than a cathode material precursor formed without decreasing the soluble ion impurities.

14. In a battery recycling environment for producing recycled charge material by adjusting a ratio of charge material metals from a black mass of exhausted batteries, a method for forming microstructures in a cathode material precursor, comprising:
adjusting a concentration of soluble ions in a leach solution based on a microstructure formed in co-precipitated particles from the leach solution; and
precipitating charge material precursor particles having the formed microstructure from the leach solution.

15. The method of any preceding claim, wherein the soluble ion impurities have a concentration of 1-1000 ppm (parts per million), preferably wherein the soluble ion impurities have a concentration of 10-500 ppm, more preferably wherein the soluble ion impurities have a concentration of 15-350 ppm.
